# EUROPÄISCHE PATENTANMELDUNG

(11) **EP 4 425 360 A1**
(43) Veröffentlichungstag der Anmeldung: **04.09.2024**
(21) Anmeldenummer: 23159645.3
(22) Anmeldetag: 02.03.2023
(51) Int. Cl.: G06F 21/56, H04W 12/128, H04L 9/40

(54) **NUTZERUNTERSTÜTZUNG BEI SCHADSOFTWAREBEREINIGUNG EINES MOBILFUNKFÄHIGEN ENDGERÄTS**

(71) Anmelder: Deutsche Telekom AG, 53113 Bonn (DE)
(72) Erfinder: JEPSEN, Kathrin, 12205 Berlin (DE); NENNKER, Axel, 14476 Potsdam (DE); SCHENK, Volker, 53881 Euskirchen (DE); HABERKORN, Günter, 92262 Birgland/Schwend (DE); KÖNIG, Bianca, 12159 Berlin (DE); WEIDEMANN, Jens, 52074 Aachen (DE); GUMANN, Patrick, 91275 Auerbach (DE)
(74) Vertreter: Nern, Peter-Michael

(57) **Zusammenfassung**

Die Erfindung betrifft ein Verfahren zur Unterstützung eines Nutzers eines mobilfunkfähigen Endgerätes MT bei einer Bereinigung seines mit einer Schadsoftware infizierten MT, wobei die Bereinigung durch Rücksetzen des MT auf einen Werksauslieferungszustand erfolgt. Vor dem Rücksetzen des MT wird durch eine dafür ausgebildete, von dem MT verarbeitete Sicherheits-App eine Verbindung von dem bei einem Mobilfunknetz eines Netzbetreibers angemeldeten MT zu einem durch in der Sicherheits-App hinterlegte Konfigurationsdaten adressierten Cloudspeichersystem aufgebaut. In einem dort allokierten Cloudspeicher werden Kopien durch die Sicherheits-App als nicht infiziert eingestufter, in dem MT gehaltener Daten als Backup gesichert. Diese Daten werden nach dem Rücksetzen des MT und dem Öffnen eines Links an das MT zurückübertragen, wobei der vorgenannte Link durch eine an das zurückgesetzte, bei dem Mobilfunknetz angemeldete MT von einer mit dem Cloudspeichersystem interagierenden Netzwerkeinrichtung des Netzbetreibers übertragene Nachricht oder von einer sich aufgrund des Empfangs dieser Nachricht selbsttätig öffnenden, im Internet bereitgestellten Website auf einem Display des MT präsentiert wird.

## Beschreibung

Die Erfindung betrifft eine Lösung zur Unterstützung eines Nutzers eines mit Computerfunktionalitäten ausgestatteten mobilfunkfähigen Endgeräts MT bei einer Bereinigung seines Endgeräts, sofern dieses mit einer Schadsoftware infiziert worden ist. Sie bezieht sich hierbei auf ein Verfahren, bei welchem die Bereinigung des Endgeräts durch Rücksetzen des infizierten MT auf einen Werksauslieferungszustand erfolgt.

In der Computertechnik sind der Schutz entsprechender Endgeräte, wie insbesondere PCs und Workstations, vor einer Infektion mit einer Schadsoftware und, sofern eine Infektion trotz entsprechender Sicherheitsmaßnahmen dennoch erfolgt ist, auch die Bereinigung betroffener Endgeräte von einer solchen Schadsoftware seit längerem ein Thema und Gegenstand dazu entwickelter technischer Lösungen. Insbesondere im Zusammenhang mit der zunehmenden und heute im Grunde nicht mehr verzichtbaren Nutzung des Internet haben sich Angriffe auf Daten über das Internet untereinander austauschende computertechnische Einrichtungen, aber auch auf Einrichtungen der telekommunikativen Infrastruktur sowie der Netzinfrastruktur sowohl hinsichtlich ihrer Quantität als auch der Qualität der Angriffsszenarien in einem kaum vorstellbaren Maße entwickelt. Ein wirksamer Schutz computertechnischer Einrichtungen gegen derartige Angriffe ist daher unentbehrlich - die Nutzung des Internet ohne einen derartigen Schutz im Grunde undenkbar.

Mit ihrer zunehmenden Leistungsfähigkeit sowie der damit einhergehenden verstärkten Ausstattung mit Computerfunktionalitäten sind insoweit auch mobile Endgeräte immer stärker gefährdet. Dies gilt auch für mobilfunkfähige Endgeräte, wie beispielsweise Smartphones oder mit einem SIM-Modul ausgestattete Tablet-PCs, mittels welcher das Internet über einen Mobilfunknetzzugang genutzt wird. Bei der Verwendung von Smartphones ist die Gefahr einer Infektion mit Schadsoftware zusätzlich noch dadurch erhöht, dass diese anders als Computer Always-On-Geräte sind, welche von sehr vielen Menschen täglich umfangreich genutzt werden und aus deren Alltag nicht mehr wegzudenken sind. Typische Angriffswege, über welche Endgeräte der letztgenannten Kategorie (im Weiteren auch MT, mit MT = Mobile Terminal) mit Schadsoftware infiziert werden, sind beispielsweise SMS (Smishing SMS) oder auch über OTT-Dienste, wie insbesondere Messanger-Dienste, oder über E-Mail versendete Nachrichten, welche einen Internetlink enthalten, nach dessen Betätigung Schadsoftware auf das MT aus dem Internet heruntergeladen wird. Aber auch vom Nutzer eines MT insbesondere von nicht überwachten und/oder autorisierten externen Quellen heruntergeladene Programmanwendungen (Apps), welche mit einer Schadsoftware verseucht sind, stellen eine erhebliche Gefahrenquelle dar.

Die Gefahren bei der Verseuchung eines MT mit Schadsoftware bestehen - neben dem Ausspionieren privater Daten - auch in der Möglichkeit, erfolgreiche Angriffe zu monetarisieren, wie zum Beispiel Premium-SMS-Versand, Auslandsanrufe und ISRF (International Revenue Share Fraud). Eventuell, das heißt eigentlich typischerweise sind zudem auf dem MT auch Bezahldienste installiert, etwa Bezahlen per Mobilfunkrechnung (Direct Carrier Billing = DCB) oder verbreitet genutzte Bezahldienste bekannter Anbieter.

In diesem Zusammenhang sind seit längerem technische Lösungen bekannt, mittels welcher Infektionen solcher mit computertechnischen Funktionalitäten ausgestatteter, mobilfunkfähiger Endgeräte detektiert werden können. So werden beispielsweise entsprechende Infektionen solcher Endgeräte durch Missbrauchserkennungseinrichtungen der Netzbetreiber auf der Basis eines Monitorings des Datenverkehrs und dabei festgestellter ungewöhnlicher Aktivitäten, wie zum Beispiel ungewöhnliche DNS-Anfragen / Aufrufe von (bekannten gefährlichen) IP-Adressen, oder festgestellter Trendänderungen im Nutzungsverhalten in Bezug auf verschiedene telekommunikative Dienste (wie beispielsweise Sprachdienste/SMS/MMS/RCS/Mehrwertdienste), erkannt. Hierbei ist es dann üblich, den Nutzer eines MT, für welches die Infektion mit einer Schadsoftware detektiert wurde, mit einer SMS oder E-Mail des Netzbetreibers (zum Beispiel auch mit einer In-App-Nachricht des Netzbetreibers) über diesen Sachverhalt zu unterrichten. Gegebenenfalls wird auch, gebunden an das jeweils mit dem als infiziert erkannten MT genutzte SIM, das Aussenden von SMS blockiert.

Die Blockade erfolgt unter anderem zur Unterbindung weiterer Infektionen. Ein infiziertes Gerät kann zum Beispiel Nachrichten mit maliziösen Links versenden. Generell können auch weitere Sperren gesetzt werden, beispielsweise wenn eine Schadsoftware das Gerät als SIM-Box und damit zur Terminierung von Gesprächen ins Ausland nutzt, wird eine Internationale Telefonie-Sperre gesetzt, oder es wird eine Drittanbietersperre gesetzt (Mehrwertdienste), falls die Schadsoftware auf die Mobilfunkrechnung des Opfers Einkäufe tätigt.

Aber, die zuvor bereits erwähnten, an einem infizierten MT häufig festzustellenden ungewöhnlichen Datenverkehre sind, wie die vorstehenden Ausführungen im Grunde schon erkennen lassen, nicht nur für dieses MT und seinen Nutzer selbst, sondern häufig auch für die Netzbetreiber ein Problem. Für den Nutzer ist es problematisch, dass mit Hilfe entsprechender Schadsoftware vertrauliche Daten und Informationen, wie beispielsweise Bankverbindungen, Passwörter, PINs und dergleichen, von seinem infizierten MT durch Kriminelle abgegriffen werden können.

Für die Netzbetreiber ergeben sich Probleme beispielsweise durch massenhaft versendete Schad-SMS oder auch durch Datenverkehre, welche durch Distributed Denial-of-Service-Attacken (DDoS) verursacht werden, die mit Hilfe einer Vielzahl von in ein Botnetz eingegliederten MT ausgeführt werden. Das dabei entstehende hohe Datenaufkommen kann zur Instabilität der Netze führen. Zudem sind TDoS-Angriffe (TDOS = Telephony Denial of Service) möglich. Das heißt, Rufnummern eines Opfers / von Opfern werden mit Anrufen überschüttet, so dass die Rufnummern (zum Beispiel für Kunden eines Unternehmens) nicht mehr erreichbar sind.

Daher haben auch die Netzbetreiber ein Interesse daran, dass die Nutzer eines mit Schadsoftware infizierten MT das betreffende Endgerät möglichst schnell wieder bereinigen. Eine insoweit meist zum Erfolg führende Maßnahme ist das Rücksetzen/Zurücksetzen eines mit Schadsoftware infizierten MT auf den Werksausl ieferungszustand.

Allerdings ist festzustellen, dass betroffene Nutzer ihre infizierten MT auch nach einer entsprechenden Information durch ihren Netzbetreiber in vielen Fällen gar nicht oder zumindest erst nach einem längeren Zeitraum bereinigen. Ursächlich hierfür ist, dass Nutzer, beispielsweise im Falle einer SMS-Sperre, auch länger ohne die Möglichkeit der Nutzung des SMS-Dienstes auskommen oder sie den mit einer Bereinigung ihres Endgeräts, beispielsweise durch dessen Rücksetzen auf den Werksauslieferungszustand, verbundenen Aufwand scheuen. In vielen Fällen wissen die Nutzer auch gar nicht, wie sie ihr Gerät in den Werksauslieferungszustand zurücksetzen können und was sie möglicherweise tun müssen, um zuvor persönliche, auf dem MT gehaltene Daten zu sichern.

Aufgabe der Erfindung ist es, eine Lösung bereitzustellen, welche den Nutzer eines mit einer Schadsoftware infizierten, mit computertechnischen Funktionalitäten ausgestatteten mobilfunkfähigen Endgeräts MT bei der Bereinigung des Endgeräts von der Schadsoftware unterstützt. Hierzu ist ein entsprechendes Verfahren anzugeben.

Die Aufgabe wird durch ein Verfahren mit den Merkmalen des Patentanspruchs 1 gelöst. Vorteilhafte Aus- und Weiterbildungen sind durch die Unteransprüche gegeben.

Wie bereits eingangs ausgeführt, erfolgt auch bei dem die Aufgabe lösenden, einen Nutzer bei der Bereinigung seines mit einer Schadsoftware infizierten, über Computerfunktionalitäten verfügenden mobilfunkfähigen Endgeräts MT unterstützenden Verfahren die Bereinigung des betroffenen Endgeräts, indem dieses auf einen Werksauslieferungszustand zurückgesetzt wird. Hierbei wird der Nutzer insbesondere bei der Sicherung auf dem MT gehaltener Daten vor dessen Zurücksetzen auf den Werksauslieferungszustand unterstützt.

Gemäß dem vorgeschlagenen Verfahren wird vor dem Rücksetzen des MT auf den Werksauslieferungszustand durch eine von dem mit einer Schadsoftware infizierten MT verarbeitete Programmanwendung (Sicherheits-App) eine Verbindung von dem bei einem Mobilfunknetz eines Netzbetreibers angemeldeten MT zu einem durch in der App hinterlegte Konfigurationsdaten adressierten Cloudspeichersystem aufgebaut. An dieses Cloudspeichersystem und einen dort allokierten Cloudspeicher werden durch die auf dem MT installierte und von diesem ausgeführte Sicherheits-App Kopien von der App als nicht infiziert eingestufter, in dem MT gehaltener Daten zur Speicherung übertragen. Die insoweit als Backup in dem Cloudspeicher gesicherten Daten werden dann später, nämlich nach dem Rücksetzen des MT in den Werksauslieferungszustand, durch Öffnen eines Links auf das MT zurückgespeichert. Der vorgenannte Link wird dabei entweder durch eine an das auf den Werkauslieferungszustand zurückgesetzte und bei dem Mobilfunknetz angemeldete MT von einer mit dem Cloudspeichersystem interagierenden Netzwerkeinrichtung des Netzbetreibers übermittelten Nachricht selbst oder von einer sich aufgrund des Empfangs einer solchen Nachricht unmittelbar oder zumindest bei einer erstmaligen Nutzung des Internets selbsttätig öffnenden, im Internet bereitgestellten Website auf einem Display des MT präsentiert.

Das gemäß einer der beiden zuvor angegebenen Verfahrensalternativen erfolgende Öffnen einer entsprechenden Website erfolgt selbstverständlich mittels eines auf dem MT installierten Browsers, nämlich unter Verwendung des Geräte-Standardbrowsers. Hierbei lässt sich das selbsttätige Starten dieses Standardbrowsers und die dabei erfolgende Öffnung, respektive das Ansprechen der vorgenannten Website (Landing-Page) im Internet mithilfe des Mechanismus des Application Port Addressing realisieren. Das heißt auf dem MT wird durch die mit dem Cloudspeichersystem interagierende Netzwerkeinrichtung mit der ausgesendeten Nachricht gezielt die App-Portadresse des Standardbrowsers adressiert.

Was die Art der Nachricht zur Übertragung des Links für die Rückübertragung der gesicherten Dateien auf das MT oder zur Veranlassung des selbsttätigen Öffnens einer einen solchen Link präsentierenden Website (Landing-Page) anbelangt, so sind hierfür unterschiedliche Möglichkeiten gegeben. Vorzugsweise wird hierfür aber die Nutzung einer SMS, nämlich einer sogenannte Bootstrap-SMS, oder eine mithilfe von RCS (mit RCS = Rich Communication Services) übertragenen Nachricht vorgeschlagen. Die Nutzung einer Bootstrap SMS ist dabei insoweit von Vorteil, als dass diese auch bei fehlender Internetverbindung, respektive ohne die Möglichkeit einer internetbasierten Datenübertragung, empfangen werden kann. Grundsätzlich denkbar ist aber auch der Versand als MMS oder sogar der Versand einer E-Mail, sofern bei der Einrichtung der Sicherheits-App dafür eine entsprechende Adresse in den Konfigurationsdaten hinterlegt wurde. Selbstverständlich kann das entsprechend zuvor angesprochenen möglichen Verfahrensgestaltung durch den Eingang einer Nachricht bei dem MT initiierte Öffnen einer den Link präsentierenden Landing-Page allerdings auch nur beim Bestehen einer Internetverbindung erfolgen.

Aufgrund der vorgenannten, später noch im Detail darzustellenden, weitgehend automatisiert ablaufenden Vorgänge muss sich der Nutzer/Inhaber des MT keine Sorgen machen, dass ihm wichtige Daten bei der Bereinigung seines MT verloren gehen. Er wird außerdem bei dem zur Bereinigung von der Schadsoftware erfolgenden Rücksetzen seines MT in den Werksauslieferungszustand zumindest unterstützt.

Das hinsichtlich der Details und unterschiedlicher Ausbildungsformen, respektive unterschiedlicher Möglichkeiten seiner Implementierung, nachfolgend noch näher zu erläuternde Verfahren ist vorzugsweise in ein umfassenderes Gesamtkonzept zum Schutz mit Computerfunktionalitäten ausgestatteter, mobilfunkfähiger Endgeräte sowie zum Umgang mit im Einzelfalle dennoch passierenden Infektionen solcher Endgeräte eingebettet. Es handelt sich hierbei um ein im Wesentlichen 3-stufiges Konzept zum Schutz vor Schadsoftware, wie Malware, Ransomware, Viren, Trojaner, Adware oder Spyware, sowie vor deren Schadwirkung. Soweit nachfolgend von Schadsoftware oder stellvertretend von Malware gesprochen wird, beziehen sich damit verbundene Aussagen, sofern nicht ausdrücklich etwas anderes angegeben ist, stets auf alle vorgenannten Kategorien von Schadsoftware.

Gemäß einer ersten Stufe dieses Konzepts, durch dessen Umsetzung eine netzzentrische Sicherheitsumgebung geschaffen wird, kommen insbesondere unterschiedliche Mechanismen zur Filterung von SMS-Nachrichten zum Einsatz, da SMS-Nachrichten einen häufigen Verbreitungsweg für Schadsoftware, respektive von Links zu Malware über das Internet in Umlauf bringenden Servern, darstellen und SMS nahezu auf jedem Mobilfunkgerät verfügbar sowie einfach über eine Telefonnummer adressierbar sind. Darüber hinaus kann aber auch eine Filterung von MMS-Nachrichten oder unter Nutzung von RCS übertragener Nachrichten In Betracht, Jenseits einer insoweit möglichen Überprüfung von bei einem jeweiligen MT eingehenden Nachrichten kommt dabei insbesondere ein netzbasiertes, dediziertes SMS-, MMS- oder RCS-Filtering zum Einsatz. Aus Datenschutzgründen werden auf einem MT (Endgerät) eingehende SMS- und MMS-Nachrichten typischerweise basierend auf Hashwerten zur Erkennung in ihnen enthaltener Schadsoftware verbreitender Links gefiltert, wodurch die Wirksamkeit eingeschränkt ist.

Wenn jedoch der Kunde/Teilnehmer im Rahmen der Nutzung einer von ihm auf seinem MT eingesetzten Sicherheits-App verdächtige Nachrichten mit dem Netzbetreiber des von ihm mittels des von seinem MT aufgenommenen SIM genutzten Mobilfunknetzwerks teilt, so können derartige Nachrichten, das heißt nicht OTT (Over The Top) versendete Nachrichten, vom Netzbetreiber im Klartext gelesen und zur Verbesserung netzbasierter Filter genutzt werden. Beispielsweise werden Smishing-Nachrichten durch Personalisierung modifiziert und können von einer auf Hashbasis arbeitenden Content-Firewall nicht als maliziös erkannt und damit gefiltert werden. Durch Zugriff auf die eingehende Nachricht im Klartext, kann jedoch ein darin enthaltener Link extrahiert und überprüft werden. Gegebenenfalls kann die Nachricht so als maliziös eingestuft und gefiltert werden.

Im Ergebnis eines entsprechenden Trainings solcher netzbasierter Filter können dann zum Beispiel im Wege eines dedizierten netzbasierten SMS-Filtering SMS-Nachrichten oder MMS-Nachrichten, welche Links zu Schadsoftware verteilenden Dropper-IP-Adressen versenden, frühzeitig detektiert und ihre Zustellung an Endgeräte verhindert werden. Zudem verbessern sich für den Netzbetreiber die Möglichkeiten, C2-IP-Adressen, also IP-Adressen von C2-Servern (Command and Control Servern), gezielt zu blockieren.

Mit einer entsprechenden, aufgrund der Einwilligung von Nutzern unterstützten netzbasierten Filterung ist es in Erweiterung des (sich mit Blick auf DUAL-SIM-Geräte gegebenenfalls auch auf SMS-Nachrichten an die SIM-Karte eines anderen Netzbetreibers beziehenden) SMS-Filtering sogar möglich, Inhalte, welche OTT (Over The Top) über das Internet übertragen werden, auf die Übermittlung schädlicher Links zu überprüfen. Aufgrund einer entsprechenden Reportingfunktion (der Nutzer teilt freiwillig verdächtige Nachrichten mit dem Netzbetreiber) und dem netzbasierten Ansatz ist es dabei möglich, die vorgenannten Filterprozesse in Echtzeit auszuführen. Anhand von Geofencing besteht dann die Möglichkeit, zielgerichtet Vorfälle versuchter Schadsoftwareverbreitung zu detektieren und entsprechende Smishingvorfälle zielgerichtet zu untersuchen. Bestandteil der ersten Stufe des Schutzkonzepts ist es zudem, eventuell dennoch entstehende Infektionen von mobilfunkfähigen Endgeräten der Kunden/Teilnehmer (Nutzer) durch eine Auswertung des Datenverkehrs und darin zu verzeichnender ungewöhnlicher Aktivitäten zu detektieren.

Eine zweite, durch eine entsprechende Sicherheits-App auf einem jeweiligen MT unterstützte Stufe des Konzepts ist der Sideloading-Schutz. Hierbei wählt der Kunde/Teilnehmer, respektive Nutzer eines MT die externen Quellen, welche er für den Bezug auf seinem MT zu installierender Apps zulassen will, gezielt aus. Im Rahmen der Sicherheits-App kann ihn der Netzbetreiber dabei dadurch unterstützen, dass dem Kunden/Teilnehmer nur solche Quellen zur Auswahl angeboten werden, welche durch den Netzbetreiber auf ihre Vertrauenswürdigkeit überprüft wurden und in einer von ihm geführten Liste vertrauenswürdiger Apps enthalten sind. Andere Quellen werden für den Bezug von Apps mittels des MT entweder gänzlich gesperrt oder der Nutzer des MT erhält zumindest einen Warnhinweis, wenn er eine App von einer nicht als vertrauenswürdig gelisteten Quelle zur Installation auf seinem MT beziehen will.

Die dritte Stufe des Sicherheitskonzepts bildet die Kunden- beziehungsweise Nutzerunterstützung bei einer weitgehend automatisierten Bereinigung eines, trotz der Umsetzung dieses Sicherheitskonzepts, aus einem wie auch immer gearteten Grund einer Mehrzahl dafür möglicher Gründe dennoch mit einer Malware infizierten Endgeräts.

Der grundsätzliche Ansatz des vorgeschlagenen Verfahrens zur Nutzerunterstützung bei der Bereinigung eines mit Malware infizierten MT ist zuvor bereits dargestellt worden. Dieser basiert, wie bereits ausgeführt, auf einem Zurücksetzen des betroffenen MT in den Werksauslieferungszustand und ist darauf ausgerichtet (jedenfalls mutmaßlich), nicht von der Infektion betroffene, auf dem MT gehaltene Daten, insbesondere persönliche Daten des Nutzers, zu sichern sowie diese nach der Bereinigung des MT dem Nutzer wieder auf dem MT zur Verfügung zu stellen. Der Grad der dabei zum Tragen kommenden Automatisierung einzelner Teile des Verfahrensablaufs hängt unter anderem von rechtlichen Rand- und Rahmenbedingungen (zum Beispiel Datenschutz) und von durch den Hersteller des MT und/oder durch den Anbieter eines mit dem MT genutzten Betriebssystems eingeräumten oder gesperrten Zugriffsrechten ab. Darüber hinaus können dabei auch Erwägungen zu Fragen der Usability für den Nutzer beachtlich sein. An dieser Stelle sei jedoch ausdrücklich darauf hingewiesen, dass aus rein technischer Sicht der gesamte Ablauf automatisiert ausgestaltet sein kann.

Nachfolgend sollen einige Teile und Aspekte dieses Ablaufs im Hinblick auf deren mögliche Ausgestaltung etwas näher betrachtet werden. Eine Unterstützung des Nutzers des MT bei der Bereinigung einer entstandenen Infektion setzt sicherlich zunächst voraus, dass eine solche Infektion überhaupt erkannt, respektive detektiert wird. Im Zusammenhang mit der bereits früher angesprochenen Sicherheits-App, durch welche die vor dem Rücksetzen des MT in den Werksauslieferungszustand zu sichernden Daten ausgelagert werden, ist es hierbei denkbar, dass es sich bei dieser App um eine nach ihrer Installation auf dem MT stets im Hintergrund laufende Programmanwendung handelt.

Sofern es sich bei dieser App um eine Sicherheits-App mit umfassenderer, also über das Auslagern der zu sichernden Daten hinausgehender Funktionalität handelt, kann eine eingetretene Infektion beispielsweise durch diese App detektiert werden. Durch die App kann der Nutzer dann mit Hilfe einer ihm auf einem Display des MT visualisierten Mitteilung auf die eingetretene Infektion aufmerksam gemacht und ihm ein Button (Schaltfläche) auf dem Display angeboten werden, durch dessen Betätigung der Bereinigungsprozess in Gang gesetzt wird. Denkbar ist es hierbei aber auch, dass die App den Bereinigungsprozess nach dem Ablauf einer dafür vorgesehenen Zeitspanne selbsttätig startet, dem Nutzer jedoch zuvor die Möglichkeit einräumt, durch Betätigung eines ihm dazu visualisierten Bedienelements diesen selbsttätigen Start der Bereinigung zu unterbinden (Opt-out).

Vorzugsweise ist das Verfahren aber so gestaltet, dass die bei einem MT aufgetretene Infektion mit einer Malware durch Netzwerkeinrichtungen des Betreibers des Mobilfunknetzes (Netzbetreiber) detektiert wird, nämlich durch ein zumindest eine solche Netzwerkeinrichtung umfassendes Missbrauchserkennungssubsystem (ADS = Abuse Detection Subsystem). Auch im Rahmen dieser bevorzugten Verfahrensgestaltung ist es möglich, die nach der Detektion einer Infektion gebotene Bereinigung des betroffenen MT automatisiert anzustoßen oder zumindest halbautomatisiert, das heißt unter Mitwirkung des Nutzers des MT, zu initiieren.

Möglich wird dies dadurch, dass das MT bei der Installation der schon mehrfach angesprochenen, insbesondere das Auslagern der zu sichernden Dateien veranlassenden Sicherheits-App bei Netzwerkeinrichtungen des Netzbetreibers für den Empfang von Push-Mitteilungen in, respektive mittels der App registriert wird. Entsprechende Push-Mitteilungen (Push Notifications) können an das MT unter Nutzung der durch dieses bei der Anmeldung bei dem Mobilfunknetz ausgesendeten, auf dem mit ihm genutzten SIM gehaltenen MSISDN an das MT übertragen werden. Aufgrund einer Übertragung einer solchen Push-Mitteilung an einen bestimmten, von der Sicherheits-App (alternativ auch als Schutz-App zu bezeichnen) genutzten Port des MT wird entweder diese App beim Empfang der Mitteilung gestartet oder die Mitteilung läuft gewissermaßen, sofern die App bereits gestartet ist, unmittelbar in dieser App ein.

Auch hierbei bestehen dann die schon für den Fall der Infektionserkennung durch die App selbst angesprochenen Möglichkeiten hinsichtlich des weiteren Ablaufs. Das heißt, der Nutzer des MT wird zumindest auf das Vorliegen einer Infektion bei seinem MT aufmerksam gemacht und der deshalb vorzugsweise auszuführende Bereinigungsvorgang von ihm durch Betätigen einer ihm dafür angebotenen Schaltfläche gestartet oder aber, vorzugsweise wiederum nach Ablauf einer festgelegten Zeitspanne und unter Einräumung einer Opt-out-Option für den Nutzer, automatisiert angestoßen. Gegebenenfalls kann das zuvor beschriebene ADS, vorzugsweise lediglich ergänzend, auch durch entsprechende Fähigkeiten der auf dem MT installierten und von ihm ausgeführten Sicherheits-App bei der Detektion von Schadsoftware unterstützt werden. Eine entsprechende, dies bewerkstelligende Implementierung des Verfahrens wäre insofern vorteilhaft, als es dann möglich wäre, eine aufgetretene Malware-Infektion bei dem MT auch dann zu detektieren, wenn dieses, zum Beispiel beim Surfen im Internet, gerade in einem WLAN betrieben wird. Eine alternative Möglichkeit für eine netzbasierte, also eine mittels des schon genannten ADS erfolgende Detektion möglicher Infektionen auch im Falle dessen, dass das MT in einem WLAN (Fremdnetz) betrieben wird, besteht darin, die Sicherheits-App mit einem DNS-Proxy oder mit einem VPN-Client auszustatten. Bei der Nutzung des Internet erfolgende DNS-Anfragen werden durch einen entsprechenden Proxyserver oder durch einen entsprechenden VPN-Client - im letztgenannten Fall über einen VPN-Tunnel (mit VPN = Virtual Private Network) - stets einem DNS-Server des Mobilfunknetzbetreibers zugeleitet.

An dieser Stelle sollen einige Ausführungen zur Adressierung des Cloudspeichersystems erfolgen, auf welchem Cloudspeicher zur temporären Zwischenspeicherung durch das diese Daten auslagernde infizierte MT allokiert wird. Gemäß einer insoweit bestehenden Möglichkeit verfügt der Nutzer des MT bereits über einen Account bei einem entsprechenden Cloudsystem. Im Zuge der Installation der Sicherheits-App auf dem MT und ihrer Konfiguration durch den Nutzer ist es diesem dabei möglich, entsprechende Adressangaben (zum Beispiel eine URL) in der App zu hinterlegen. Je nach Implementierung ist es dem Nutzer gegebenenfalls darüber hinaus möglich, für eine Anmeldung bei dem Cloudsystem benötigte Login-Daten in der App zu hinterlegen. Andernfalls wird er im Zusammenhang mit dem Start des vorgesehenen Auslagerungsvorgangs zur Eingabe dieser entsprechenden Credentials - zum Beispiel Nutzername und PIN/Passwort - aufgefordert.

Über die zuvor beschriebenen Möglichkeiten hinaus kann das Verfahren auch derart umgesetzt und können die dieses unterstützenden Einrichtungen des Netzbetreibers so eingerichtet sein, dass für die Zwischenspeicherung der auszulagernden Daten ein durch den Netzbetreiber selbst oder durch einen von diesem hierfür genutzten Anbieter betriebenes Cloudsystem genutzt wird. Die zur Adressierung des Cloudsystems sowie zur temporären Allokierung durch das Verfahren benötigten Cloudspeichers erforderlichen Daten können in diesem Fall durch den vorzugsweise auch die Sicherheits-App zur Verfügung stellenden Netzbetreiber des Mobilfunknetzes in der App hinterlegt werden.

Der in dem solchermaßen adressierten Cloudspeichersystem jeweils zum Zweck der Durchführung des Verfahrens allokierte Speicherbereich kann dabei beispielsweise mit der von dem MT bei der Detektion einer Infektion verwendeten MSISDN assoziiert sein. Der entsprechende Cloudspeicher (Speicherbereich) wird hierbei vorzugsweise nur temporär allokiert. Er kann beispielsweise nach einer großzügig bemessenen Zeitspanne oder nach dem Zurückladen der in diesem Speicherbereich gesicherten Dateien auf das von der Schadsoftware bereinigte MT wieder freigegeben werden.

Was die Art/Kategorie(n) der mit dem Backup gesicherten Dateien anbelangt, wonach es sich, wie beansprucht, um durch die Sicherheits-App als nicht infiziert eingestufte Dateien handelt, so ist auch dies letztlich eine Frage der Implementierung des Verfahrens und hierbei insbesondere der Auslegung der ein zentrales Umsetzungselement dieses Verfahrens ausbildenden Sicherheits-App. Entsprechend einem grundsätzlichen Ansatz wird dabei davon ausgegangen, dass als nicht infiziert, aber andererseits auch als besonders wichtig für den Nutzer, seine persönlichen, auf dem MT gehaltenen Daten, wie Fotos, Kontakte, Kalendereinträge und Dokumente, einzustufen sind.

Demnach werden in dem Cloudspeicher zumindest solche persönlichen Daten enthaltende Dateien gesichert. Gemäß diesem Ansatz werden also auf dem MT installierte Programmanwendungen, respektive Apps, mit dem im Rahmen des Verfahrens angelegten Backup nicht gesichert, da anderenfalls die Gefahr bestünde, dass das MT nach der Rückübertragung der gesicherten Daten erneut infiziert ist. Apps/Programmanwendungen müssen gegebenenfalls später durch den Nutzer selbst wieder auf dem zurückgesetzten MT installiert werden. Allenfalls werden außerdem nur lokal auf dem MT gehaltene App-Daten von Apps, die laut einer in der Sicherheits-App hinterlegten oder durch die Sicherheits-App von Netzeinrichtungen des Netzbetreibers abrufbaren Liste aus vertrauenswürdigen Quellen stammen, ebenfalls in dem Cloudspeicher gesichert, also etwa jegliche Art von Personalisierungsdaten und sonstige Konfigurationsdaten, nicht der Programm-Code dieser Apps selbst.

Die Sicherheits-App kennt mithin gewissermaßen eine Liste von Anwendungen (Apps), bei denen lokale Datenhaltung vorkommt. Diese Apps werden vom Betriebssystem eindeutig identifiziert (zum Beispiel durch Package Name, App-ID) und ihr Vorhandensein auf dem MT kann von der Sicherheits-App bei Bestehen einer entsprechenden Berechtigung abgefragt werden. Die Sicherheits-App "kennt" auch den Verbreitungsgrad solcher Anwendungen und kann eine Schätzung dazu abgeben, wie wichtig solche Daten gegebenenfalls sind (wie beispielsweise ein als besonders wichtig anzusehender Passwort-Tresor). Dabei ist davon auszugehen, dass die Sicherheits-App hinsichtlich entsprechender Informationen ständig aktualisiert, kontinuierlich weiterentwickelt und durch Updates an sich ändernde Gegebenheiten angepasst wird.

Ergänzend und abhängig von insoweit durch das Betriebssystem gewährten Zugriffsrechten können jedoch im Zuge der Backupsicherung zusätzlich bestimmte Einstellungsdaten gespeichert werden, welche mit vom Nutzer vorgenommenen Einstellungen zur Bedienung seines MT, wie beispielsweise mit Spracheinstellungen, assoziiert sind. Das Verfahren kann zudem in der Weise ausgestaltet, respektive implementiert sein, dass dem Nutzer die Möglichkeit eingeräumt wird, von ihm auszuwählende Dateien mit Daten trotz ihrer Einstufung als (potenziell) nicht infiziert von der Übertragung in den Cloudspeicher auszunehmen - etwa, weil der Nutzer sich beispielsweise bei dieser Gelegenheit auch von bestimmten Daten trennen will. Dazu wird dem Nutzer des MT beim Start des Übertragungsvorgangs zur Sicherung auf dem MT gehaltener Daten auf einem Display des MT eine nach Kategorien differenzierte Liste der zur Übertragung an den Cloudspeicher vorgesehenen Daten angezeigt und ihm die Möglichkeit gegeben, durch Betätigung mindestens eines auf dem Display visualisierten Bedienelementes einzelne der aufgelisteten Dateikategorien von der Übertragung auszunehmen.

Das Verfahren kann ferner so ausgestaltet sein, dass das MT nach der Übertragung der als Backup in dem Cloudspeicher zu sichernden Daten durch die von diesem weiterhin ausgeführte Sicherheits-App in einem automatisierten Prozess in den Werksauslieferungszustand zurückgesetzt wird. Dies kann entweder selbsttätig nach Beendigung der Übertragung der als Backup in dem Cloudspeicher zu sichernden Daten oder nach der Betätigung eines entsprechenden, durch die Sicherheits-App für den Nutzer auf einem Display des MT visualisierten Bedienelements erfolgen. Im erstgenannten Falle kann dabei ebenfalls eine Opt-out-Funktion implementiert sein, in der Weise, dass der Nutzer nach der Sicherung der Backup-Dateien auf ein bevorstehendes Zurücksetzen seines MT in den Werksauslieferungszustand mittels einer auf dem Display ausgegebenen Meldung hingewiesen und ihm die Möglichkeit gegeben wird, durch Betätigung entsprechender auf einem Display visualisierter, also virtueller Bedienelemente zunächst von einem Rücksetzen seines MT und damit von dessen Bereinigung von der Schadsoftware abzusehen, um dies möglicherweise später durchzuführen.

Typischerweise wird der Nutzer des MT im Zusammenhang mit der vorzugsweise mittels einer Push-Nachricht erfolgenden Information über die eingetretene Infektion mit weiteren Informationen versorgt. Gegebenenfalls kann es sich hierbei, für den Fall, dass die jeweilige Implementierung des Verfahrens ein automatisiertes Rücksetzen des MT in den Werksauslieferungszustand ausnahmsweise nicht vorsieht, um einen Hinweis dazu handeln, wo er eine Beschreibung der zum Zurücksetzen des MT auf den Werksauslieferungszustand von ihm in diesem Falle manuell auszuführenden Schritte erhält. Ferner kann der Kunde/Teilnehmer (Nutzer) auch darüber informiert werden, wie er nach dem Rücksetzen seines MT in den Werksauslieferungszustand weiter vorgehen soll. So kann es vorgesehen sein, dass der Kunde/Teilnehmer seinen Mobilfunkprovider durch das Absetzen einer SMS an eine ihm dazu mitgeteilte Rufnummer über die erfolgte Bereinigung seines MT unterrichtet, damit ihm im Gegenzug Nachricht zugesendet wird, welche den Link zur Rückübertragung der als Backup gesicherten Daten enthält oder aufgrund welcher sich die den entsprechenden Link präsentierende Website öffnet.

Denkbar ist es aber auch, dass die die vorgenannte Nachricht nach dem Rücksetzen des MT in den Werksauslieferungszustand und dessen erstmaliger Wiederanmeldung in dem Mobilfunknetz proaktiv durch mit dem Cloudspeichersystem interagierende Netzeinrichtungen des Netzbetreibers an das MT ausgesendet wird.

Darüber hinaus, aber insbesondere in Verbindung mit der zuletzt beschriebenen Verfahrensausgestaltung, kann es zudem vorgesehen sein, dass im Anschluss an das Rückschreiben der durch das Backup gesicherten Dateien auf das MT eine automatisierte Reinstallation der Sicherheits-App erfolgt.

## Patentansprüche

1. Verfahren zur Unterstützung eines Nutzers eines mit Computerfunktionalitäten ausgestatteten, mobilfunkfähigen Endgerätes MT bei einer Bereinigung seines mit einer Schadsoftware infizierten MT, wobei die Bereinigung durch Rücksetzen des infizierten MT auf einen Werksauslieferungszustand erfolgt, **dadurch gekennzeichnet, dass** vor dem Rücksetzen des MT auf den Werksauslieferungszustand durch eine dafür ausgebildete, von dem MT verarbeitete Sicherheits-App, nämlich durch eine auf dem MT installierte Programmanwendung, eine Verbindung von dem bei einem Mobilfunknetz eines Netzbetreibers angemeldeten MT zu einem durch in der Sicherheits-App hinterlegte Konfigurationsdaten adressierten Cloudspeichersystem aufgebaut wird und an einen dort allokierten Cloudspeicher Kopien durch die Sicherheits-App als nicht infiziert eingestufter, in dem MT gehaltener Daten zur Speicherung übertragen werden und dass die als Backup in dem Cloudspeicher gesicherten Daten nach dem Rücksetzen des MT in den Werksauslieferungszustand und dem Öffnen eines Links an das MT zurückübertragen und dort gespeichert werden, wobei der bei seinem Öffnen zur Zurückübertragung der gesicherten Daten führende Link durch eine an das zurückgesetzte, bei dem Mobilfunknetz angemeldete MT von einer mit dem Cloudspeichersystem interagierenden Netzwerkeinrichtung des Netzbetreibers übertragene Nachricht oder von einer sich aufgrund des Empfangs einer solchen Nachricht unmittelbar, aber zumindest bei einer erstmaligen Nutzung des Internets selbsttätig öffnenden, im Internet bereitgestellten Website auf einem Display des MT präsentiert wird.

2. Verfahren nach Anspruch 1, **dadurch gekennzeichnet, dass** die durch die mit dem Cloudspeichersystem interagierenden Einrichtungen zur Präsentation des Links für die Rückübertragung der als Backup gesicherten Dateien an das MT übermittelte Nachricht als Bootstrap-SMS übertragen wird.

3. Verfahren nach Anspruch 1, **dadurch gekennzeichnet, dass** die durch die mit dem Cloudspeichersystem interagierenden Einrichtungen zur Präsentation des Links für die Rückübertragung der als Backup gesicherten Dateien an das MT übermittelte Nachricht unter Nutzung von Rich Communication Services RCS übertragen wird.

4. Verfahren nach einem der Ansprüche 1 bis 3, **dadurch gekennzeichnet, dass** dem Nutzer des MT beim Start des Übertragungsvorgangs zur Sicherung auf dem MT gehaltener Daten auf einem Display des MT eine nach Kategorien differenzierte Liste der zur Übertragung an den Cloudspeicher vorgesehenen Daten angezeigt und ihm die Möglichkeit gegeben wird, durch Betätigung mindestens eines auf dem Display visualisierten Bedienelementes einzelne der aufgelisteten Dateikategorien von der Übertragung auszunehmen.

5. Verfahren nach einem der Ansprüche 1 bis 4, wobei die Infektion des MT von einem durch mindestens eine Netzwerkeinrichtung ausgebildeten, das MT auf das Eintreten von Infektionen überwachenden Missbrauchserkennungssubsystem ADS des Netzbetreibers detektiert wird, **dadurch gekennzeichnet, dass** durch das ADS aufgrund der detektierten Infektion, unter Nutzung einer auf einem mit dem betroffenen MT verwendeten Teilnehmeridentifikationsmodul SIM gehaltenen und bei der Anmeldung des MT bei dem Mobilfunknetz durch das MT ausgesendeten MSISDN, eine Push-Mitteilung an das MT übertragen wird, nach deren Empfang bei dem MT durch die Sicherheits-App
- selbsttätig die Verbindung zu dem Cloudsystem aufgebaut und die Übertragung der Kopien der zu sichernden Daten an den Cloudspeicher gestartet wird
oder
- auf einem Display des MT mindestens ein Bedienelement visualisiert wird, nach dessen durch den Nutzer des MT erfolgender Betätigung die Verbindung zu dem Cloudsystem aufgebaut und die Übertragung der Kopien der zu sichernden Daten an den Cloudspeicher gestartet wird.

6. Verfahren nach Anspruch 5, **dadurch gekennzeichnet, dass** bei der Nutzung des Internet mittels des MT erfolgende DNS-Anfragen einem DNS-Server des Netzbetreibers des Mobilfunknetzes durch einen von der Sicherheits-App umfassten DNS-Proxy zugeleitet werden.

7. Verfahren nach Anspruch 5, **dadurch gekennzeichnet, dass** bei der Nutzung des Internet mittels des MT erfolgende DNS-Anfragen durch einen von der Sicherheits-App umfassten VPN-Client über einen VPN-Tunnel einem DNS-Server des Netzbetreibers des Mobilfunknetzes zugeleitet werden.

8. Verfahren nach einem der Ansprüche 1 bis 7, **dadurch gekennzeichnet, dass** das MT durch die gestartete Sicherheits-App vor Infektionen mit Schadsoftware geschützt und auf das Eintreten eventueller Infektionen überwacht wird und dass im Falle einer dennoch eingetretenen, durch die Sicherheits-App detektierten Infektion durch die Sicherheits-App
- selbsttätig die Verbindung zu dem Cloudsystem aufgebaut und die Übertragung der Kopien der zu sichernden Daten an den Cloudspeicher gestartet wird
oder
- auf einem Display des MT mindestens ein Bedienelement visualisiert wird, nach dessen durch den Nutzer des MT erfolgender Betätigung die Verbindung zu dem Cloudsystem aufgebaut und die Übertragung der Kopien der zu sichernden Daten an den Cloudspeicher gestartet wird.

9. Verfahren nach einem der Ansprüche 1 bis 8, **dadurch gekennzeichnet, dass** nach der Übertragung der als Backup in dem Cloudspeicher zu sichernden Dateien des MT durch die von dem MT weiterhin ausgeführte Sicherheits-App, selbsttätig oder nach Betätigung eines entsprechenden, durch die Sicherheits-App für den Nutzer auf einem Display des MT visualisierten Bedienelements, ein automatisierter Prozess zum Rücksetzen des MT in den Werksauslieferungszustand gestartet wird.

10. Verfahren nach einem der Ansprüche 1 bis 9, **dadurch gekennzeichnet, dass** die Nachricht, welche den Link für die Rückübertragung der als Backup in dem Cloudspeicher gesicherten Daten enthält oder aufgrund welcher sich die den entsprechenden Link präsentierende Website öffnet, nach dem Rücksetzen des MT in den Werksauslieferungszustand durch die mit dem Cloudspeichersystem interagierenden Netzeinrichtungen des Netzbetreibers proaktiv an das zurückgesetzte MT übertragen wird, sobald sich dieses erstmals wieder bei dem Mobilfunknetz anmeldet.

11. Verfahren nach einem der Ansprüche 1 bis 10, **dadurch gekennzeichnet, dass** sich an Rückübertragung der in dem Cloudspeicher als Backup gesicherten Daten auf das in den Werksauslieferungszustand zurückgesetzte und bei dem Mobilfunknetz angemeldete MT eine Reinstallation der Sicherheits-App auf dem MT anschließt, indem selbsttätig ein automatisierter Prozess zum Download der App bei einer Netzwerkeinrichtung des Netzbetreibers und zu deren Installation auf dem MT gestartet wird.
